# EUROPÄISCHE PATENTSCHRIFT

(11) **EP 2 516 573 B1**
(45) Veröffentlichungstag und Bekanntmachung des Hinweises auf die Patenterteilung: **07.02.2018**
(21) Anmeldenummer: 10790401.3
(22) Anmeldetag: 07.12.2010
(51) Int. Cl.: C09J 7/02, C09J 5/06, B29C 65/36

(54) **INDUKTIV ERWÄRMBARES KLEBEBAND MIT DIFFERENTIELLEM LÖSEVERHALTEN**
INDUCTIVELY HEATABLE ADHESIVE TAPE HAVING DIFFERENTIAL DETACHMENT PROPERTIES
RUBAN ADHÉSIF POUVANT ÊTRE CHAUFFÉ PAR INDUCTION ET PRÉSENTANT UN COMPORTEMENT DE LIBÉRATION DIFFÉRENTIEL

(30) Priorität: 21.12.2009 DE 102009055091
(43) Veröffentlichungstag der Anmeldung: 31.10.2012
(73) Patentinhaber: tesa SE, 22848 Norderstedt (DE)
(72) Erfinder: KEITE-TELGENBÜSCHER, Klaus, 22529 Hamburg (DE); ENGELDINGER, Hans Karl, 25451 Quickborn (DE); GRÜNAUER, Judith, 22761 Hamburg (DE)
(86) Internationale Anmeldenummer: PCT/EP2010/069041
(87) Internationale Veröffentlichungsnummer: WO 2011/085873

(56) Entgegenhaltungen:
- WO-A1-98/18877
- DE-A1-102006 055 093
- DE-A1-102007 062 447
- DATABASE WPI Week 199537 Thomson Scientific, London, GB; AN 1995-281150 XP002637792, & JP 7 179828 A (NICHIBAN KK) 18. Juli 1995 (1995-07-18)

## Beschreibung

Die Erfindung betrifft ein Verfahren zum Verkleben zweier Substrate, insbesondere zweier Kunststoffsubstrate, miteinander mittels hitzeaktivierberer Klebemassen, sowie weiterhin ein verfahren zum Wiederlösen des so entstandenen Verklebungsverbundes der Substarte miteinander.

Hitzeaktiviert verklebbare Flächenelemente (hitzeaktivierbare Flächenelemente) werden eingesetzt, um hochfeste Verbindungen von Fügeteilen zu erhalten. Insbesondere eignen sich derartige Flächenelemente, um bei einer geringeren Dicke der Klebefuge vergleichbare oder höhere Festigkeiten zu erreichen als dies mit Flächenelementen möglich ist, die ausschließlich Haftklebemassensysteme enthalten. Derartige hochfeste Verklebungen sind insbesondere bei der voranschreitenden Miniaturisierung von elektronischen Geräten von Bedeutung, etwa im Bereich der Konsumgüterelektronik, der Unterhaltungselektronik oder der Kommunikationselektronik, zum Beispiel für Mobiltelefone, PDAs, Laptops und andere Rechner, Digitalkameras und Anzeigegeräte wie etwa Displays und Digitalreader.

In besonderem Maße steigen die Anforderungen an die Verarbeitbarkeit und Stabilität von Klebeverbindungen bei tragbaren Konsumgüterelektronikartikeln. Dies liegt zum einen daran, dass die Abmessungen solcher Artikel immer geringer werden, so dass sich auch die für eine Klebeverbindung nutzbare Fläche verringert. Zum anderen muss eine Klebeverbindung in derartigen Geräten besonders stabil sein, da tragbare Artikel starken mechanischen Belastungen wie etwa Stößen oder Stürzen standhalten müssen und zudem in einem breiten Temperaturbereich eingesetzt werden sollen.

Daher werden in derartigen Produkten bevorzugt hitzeaktiviert verklebbare Flächenelemente eingesetzt, die hitzeaktiviert verklebende Klebemassen aufweisen, also Klebemassen, die bei Raumtemperatur keine oder eine allenfalls geringe Eigenklebrigkeit aufweisen, unter Einwirkung von Hitze aber die für eine Verklebung erforderliche Klebkraft zu den jeweiligen Verklebungssubstraten (Fügepartnern, Haftgrund) aufbauen. Solche hitzeaktiviert verklebenden Klebemassen liegen bei Raumtemperatur häufig in fester Form vor, werden während des Verklebens aber durch Temperatureinwirkung entweder reversibel oder irreversibel in einen Zustand hoher Klebkraft überführt. Reversibel hitzeaktiviert verklebende Klebemassen sind zum Beispiel Klebemassen auf der Basis thermoplastischer Polymere, wohingegen irreversibel hitzeaktiviert verklebende Klebemassen etwa Reaktivklebemassen sind, in denen infolge einer thermischen Aktivierung chemische Reaktionen wie beispielsweise Vernetzungsreaktionen ablaufen, wodurch diese Klebemassen besonders für permanente hochfeste Verklebungen geeignet sind.

Um hitzeaktivierbare Klebebänder an zwei Fügepartner aus unterschiedlichen Materialien anzupassen, beispielsweise aus Metall und Kunststoff, ist es im Stand der Technik bekannt, ein mehrschichtiges, auf jeder Seite jeweils unterschiedliche hitzeaktivierbare Klebmassen enthaltendes Klebeband zu verwenden (siehe z.B. die Schrift DE 10 2006 055 093 A1). Solcherart mehrschichtige hitzeaktivierbare Klebebänder werden auch in Bereichen eingesetzt, in denen haftklebrige Eigenschaften in hitzeaktivierbare Klebebänder eingebracht werden sollen, etwa um die Fügeteile in Position zu halten. Hier ist zumindest eine Schicht zumindest partiell als Haftkleber ausgeführt, der in speziellen Fällen auch durch eine chemische Reaktion - die in der Regel hitzeaktiviert wird - in einen nicht haftklebrigen Zustand überführt werden kann (vgl. z.B. die EP 1 078 965 A2 und die US 4,120,712 A)

Bekannt ist auch, aus Klebebändern der Geometrie der Klebefuge angepasste Stanzlinge herzustellen. Zur Verbesserung der Stanzbarkeit von hitzeaktivierbaren Folien werden innenliegende Kunststofffolien vorgeschlagen, welche auf jeder Seite mit jeweils einer hitzeaktivierbaren Klebmasse versehen sind, die auch verschieden sein können.

Allen hitzeaktiviert verklebenden Klebemassensystemen ist gemeinsam, dass diese beim Verkleben erhitzt werden müssen. Insbesondere bei Verklebungen, bei denen die Klebemassensysteme nach außen hin von den Verklebungssubstraten vollflächig abgedeckt sind, ist es besonders wichtig, die zum Aufschmelzen oder zur Aktivierung der Klebemasse erforderliche Wärme schnell zu der Verklebungsfläche hin zu transportieren. Ist dabei eines der Verklebungssubstrate ein guter Wärmeleiter, so ist es möglich, dieses Verklebungssubstrat durch eine externe Wärmequelle zu erwärmen, beispielsweise durch einen direkten Wärmeübertrager, eine Infrarotheizung oder dergleichen.

Die für eine schnelle homogene Erwärmung der bekannten Klebemasse erforderliche kurze Aufheizzeit lässt sich im Falle eines solchen direkten Erhitzens oder Kontakterhitzens allerdings nur für einen großen Temperaturgradienten zwischen der Wärmequelle und dem Verklebungssubstrat realisieren. Daher sollte das zu erwärmende Verklebungssubstrat selber gegenüber Temperaturen unempfindlich sein, die zum Teil sogar erheblich höher ausfallen können als es das Aufschmelzen oder Aktivieren der Klebemasse eigentlich erfordern würde. Problematisch ist also der Einsatz hitzeaktivierbarer Klebefolien für Kunststoff-Kunststoff-Verklebungen. Als Kunststoffe werden insbesondere in der Konsumgüterelektronik beispielsweise Polyvinylchlorid (PVC), Acrylnitril-Butadien-StyrolCopolymere (ABS), Polycarbonate (PC), Polypropylen (PP) oder Blends basierend auf diesen Kunststoffen eingesetzt.
Anders ist die Situation also, wenn keines der Verklebungssubstrate die Wärme hinreichend gut leitet oder wenn die Verklebungssubstrate gegenüber höheren Temperaturen empfindlich sind, wie dies zum Beispiel bei vielen Kunststoffen der Fall ist, aber auch bei elektronischen Bauteilen wie etwa Halbleiterbauteilen oder Flüssigkristallmodulen. Zur Verklebung von Verklebungssubstraten aus wenig thermisch leitfähigen oder wärmeempfindlichen Materialien bietet es sich daher an, das hitzeaktiviert verklebbare Flächenelement selbst mit einem intrinsischen Mechanismus zum Heizen auszurüsten, so dass die zum Verkleben erforderliche Wärme nicht von außen eingebracht werden muss, sondern direkt im Innern des Flächenelements selber erzeugt wird. Aus dem Stand der Technik sind unterschiedliche Mechanismen bekannt, mittels derer sich ein derartiges internes Erwärmen realisieren lässt, etwa als Erwärmen mittels einer elektrischen Widerstandsheizung, durch magnetische Induktion oder infolge einer Wechselwirkung mit Mikrowellenstrahlung.

Die Erwärmung im magnetischen Wechselfeld wird zum Einen durch induzierte Wirbelströme in elektrisch leitfähigen Rezeptoren, zum Anderen - modellhaft erklärt - durch Hystereseverluste der umklappenden Elementarmagnete im Wechselfeld erreicht. Für das Ausbilden von Wirbelströmen ist allerdings eine Mindestgröße der leitfähigen Domänen erforderlich. Diese Mindestgröße steigt, je geringer die Frequenz des Wechselfeldes ist. Je nach Rezeptormaterial treten beide Effekte gemeinsam (z.B. magnetische Metalle) oder jeweils nur ein Effekt (z.B. Aluminium: nur Wirbelströme; Eisenoxidpartikel: nur Hyterese) auf.

Grundsätzlich sind verschiedene Erhitzungsvorrichtungen für eine induktive Erwärmung bekannt; diese lassen sich unter anderem nach den Frequenzen unterscheiden, die das mit der jeweiligen Erhitzungsvorrichtung erzeugte Magnet-Wechselfeld besitzt. So kann eine Induktionserwärmung unter Verwendung eines Magnetfeldes erfolgen, dessen Frequenz im Frequenzbereich von etwa 100 Hz bis etwa 200 kHz liegt (den so genannten Mittelfrequenzen; MF) oder auch im Frequenzbereich von etwa 300 kHz bis etwa 100 MHz liegt (den so genannten Hochfrequenzen; HF). Darüber hinaus sind als Sonderfall auch Erhitzungsvorrichtungen bekannt, deren Magnetfeld eine Frequenz aus dem Bereich der Mikrowellen besitzt, beispielsweise die Mikrowellen-Standardfrequenz von 2,45 GHz.

Mit der Frequenz des eingesetzten Wechselfeldes steigt der technische Aufwand, der betrieben werden muss, um das Wechselfeld zu erzeugen, und damit die Kosten für die Erhitzungsvorrichtung. Während Mittelfrequenzanlagen derzeit bereits zu einem Marktpreis von etwa 5.000 Euro erhältlich sind, sind für Hochfrequenzanlagen mindestens 25.000 Euro zu berücksichtigen. Darüber hinaus steigen auch die Sicherheitsanforderungen an die Erwärmungsanlage mit der Frequenz, so dass bei Hochfrequenzanlagen zusätzlich zu den höheren Anschaffungskosten regelmäßig auch höhere Kosten für die Installation einer solchen Anlagentechnik anfallen.

Bei der Verwendung von hohen Frequenzen zur Verklebung von Bauteilen in elektronischen Geräten können zudem unerwünschte Schädigungen elektronischer Bauteile in diesen Geräten während der Beaufschlagung mit dem elektromagnetischen Wechselfeld auftreten.

Als Anwendungsbeispiele für die Induktionserwärmung können Fertigungsprozesse aus den Bereichen Kleben, Nahtabdichten, Härten, Anlassen und Ähnlichem dienen. Die gängige Technik dabei ist, solche Verfahren anzuwenden, bei denen die Induktoren Bauteile komplett oder teilweise umfassen und über den ganzen Umfang gleichmäßig oder beim Bedarf absichtlich ungleichmäßig erwärmen, z. B. nach der EP 1 056 312 A2 oder der DE 20 2007 003 450 U1.

In der DE 20 2007 003 450 U1 wird beispielsweise auch ein Verfahren zum Verschmelzen einer Behälteröffnung mit einer Siegelfolie dargestellt, bei dem die metallische Einlage einer Siegelfolie mittels Induktion erwärmt wird und durch Wärmeleitung ein Siegelkleber aufgeschmolzen wird. Die Behälter sind durch einen aufschraubbaren oder einrastbaren Deckel verschlossen, der eine Metallfolie und eine benachbart angeordnete Kunststoff-Siegelfolie enthält. Mit Hilfe der Induktionsspule werden in der Metallfolie Wirbelströme erzeugt, welche die Metallfolie erwärmen. Durch den Kontakt zwischen Metall- und Siegelfolie wird auch die Siegelfolie erwärmt und dadurch mit der Behälteröffnung verschmolzen. Tunnelförmige Induktionsspulen weisen gegenüber flachen Spulen den Vorteil auf, dass auch Behälter mit einem großen Abstand zwischen der Metallfolie und der Deckeloberkante versiegelt werden können, da die Spule von der Seite auf die Metallfolie einwirkt.
Nachteilig an diesem Verfahren ist, dass ein wesentlich größerer Teil des Bauteilvolumens als das reine Klebervolumen und die Metallfolie durch das elektromagnetische Feld geführt wird und somit im Falle eines elektronischen Bauteils Schädigungen nicht ausgeschlossen sind, da an unerwünschten Stellen Erwärmungen auftreten können. Weiterhin nachteilig ist, dass die gesamte Deckefolie aufgeheizt wird, wobei für die Verklebung nur der im Kontakt mit dem Behälter stehende Randbereich ausreichend wäre. Somit ergibt sich ein großes Verhältnis von aufgeheizter Fläche zu Verklebungsfläche, welches für typische Getränkeflaschen mit einem Öffnungsdurchmesser von 25 mm und einer Verklebungsbreite von 2 mm etwa bei 6,5 liegt. Für größere Behälterdurchmesser bei in der Regel gleichbleibender Verklebungsbreite erhöht sich das Verhältnis.

In den letzten Jahren sind für das induktive Erwärmen insbesondere beim Verkleben von Kunststoff auf Kunststoff induktiv erwärmbare hitzeaktivierbare Klebefolien (HAFs) erneut in das Zentrum der Aufmerksamkeit gerückt. Der Grund hierfür ist den nunmehr verfügbaren nanopartikulären Systemen wie zum Beispiel MagSilica™ (Evonik AG) zu suchen, die in das Material des zu erwärmenden Körper eingearbeitet werden können und so ein Erwärmen des Körpers über sein gesamtes Volumen ermöglichen, ohne dass dessen mechanische Stabilität dadurch in nennenswerter Weise beeinträchtigt wird.

Aufgrund der geringen Größe dieser nanoskopischen Systeme ist es jedoch nicht möglich, derartige Produkte in Magnet-Wechselfeldern mit Frequenzen aus dem Mittelfrequenzbereich effizient zu erwärmen. Vielmehr sind für die neuartigen Systeme Frequenzen aus dem Hochfrequenzbereich erforderlich. Grade bei diesen Frequenzen tritt jedoch das Problem einer Beschädigung von elektronischen Bauteilen im Magnet-Wechselfeld besonders stark zutage. Die Erzeugung von Magnet-Wechselfeldern mit Frequenzen im Hochfrequenzbereich erfordert überdies einen erhöhten apparativen Aufwand und ist somit ökonomisch ungünstig. Zudem ist die Verwendung von nanopartikulären Füllstoffen auch in ökologischer Hinsicht problematisch, da sich diese bei einem späteren Recycling kaum von den umgebenden Materialien abtrennen lassen. Darüber hinaus ist es nur schwer möglich, diese Partikel in sehr dünnen Filmen einzusetzen, da infolge der starken Neigung nanopartikulärer Systeme zur Agglomeratbildung die hiermit erzeugten Filme zumeist stark inhomogen sind.

Weiterhin und zur Vermeidung der vorstehenden Problematik können hitzeaktivierbare Folien (HAFs), die induktiv erwärmbar sein sollen, mit metallischen oder metallisierten Flächengebilden gefüllt sein. Dies ist bei der Verwendung von vollflächigen Metallfolien auch im Mittelfrequenzbereich sehr effizient, hohe Erwärmungsraten können erreicht werden, so dass Induktionszeiten zwischen 0,05 und 10 s realisiert werden können. Dabei ist auch die Verwendung von sehr dünnen leitfähigen Folien zwischen 0,25 µm und 75 µm möglich.

Bekannt ist auch der Einsatz von durchbrochenen Metallfolien, Drahtnetzen, Streckmetall, Metallvliesen oder Fasern, durch die das Matrixmaterial der HAF hindurchdringen kann, so dass die Kohäsion des Verbunds verbessert wird. Die Effizienz der Erwärmung nimmt dadurch allerdings ab.

Für Verklebungen innerhalb mobiler elektronischer Geräte ist das mit induktiv erwärmbaren Nanopartikeln ausgestattete Produkt Duolplocoll RCD der Firma Lohmann bekannt. Dieses ist ausschließlich im Hochfrequenzbereich technisch nutzbar zu erwärmen. Die oben beschriebenen Nachteile der Verwendung von Partikeln und hochfrequenten Wechselfeldern treffen auch auf dieses Produkt zu. Für dieses Produkt wird auch die Möglichkeit der Lösung von damit hergestellten Klebverbindungen mittels erneuter induktiver Erwärmung dargestellt. Nachteilig an solcherart partikelgefüllten Klebebändern ist, dass bei hoher Erwärmung die Kohäsion nachlässt und sich somit nach der Trennung der Bauteile Klebebandreste auf beiden Fügepartnern befinden, welche jeweils mit Partikeln kontaminiert sind. Dies ist für ein stoffliches Recycling ungünstig.

Die Trennung zusammengeklebter Bauteile mittels Induktionserwärmung ist im Stand der Technik bekannt. Vielfach werden dabei ebenfalls partikelbasierte Klebersysteme mit den oben beschriebenen Nachteilen verwendet. Für flächige Suszeptormaterialien wird dies in EP 1 453 360 A2 beschrieben.

Bei der Verwendung von flächigen Gebilden zur Erzeugung der Wärme im magnetischen Wechselfeld ergibt sich das Problem, dass bei einer Lösung der Verbindung durch thermische Effekte (z.B. Aufschmelzen oder chemische Dekomposition) nicht sicher vorausgesagt werden kann, auf welchem der Fügepartner das innenliegende wärmeerzeugende Flächengebilde haften bleiben wird. Daher ergeben sich auch hier Schwierigkeiten durch Kontamination beim stofflichen Recycling.

Aufgabe der vorliegenden Erfindung war es, ein Material und Verfahren zur Verfügung zu stellen, mit dem Verklebungen, insbesondere Kunststoff-Kunststoff-Verklebungen unter Vermeidung der Nachteile des Stands der Technik hergestellt und kontrolliert wieder getrennt werden können.

Gelöst wird die Aufgabe durch ein Verfahren zum Verkleben (so dass ein Klebeverbund entsteht) und Wiederlösen (so dass der Klebeverbund wieder getrennt wird) zweier Substratoberflächen, wobei für die Verklebung ein hitzeaktiviert verklebbares Flächenelement eingesetzt wird, das hitzeaktiviert verklebbare Flächenelement zumindest ein elektrisch leitfähiges Flächengebilde sowie zumindest zwei Schichten unterschiedlicher hitzeaktivierbarer Klebmassen umfasst, wobei sich die erste hitzeaktivierbare Klebmassenschicht im Wesentlichen auf der einen Seite des elektrisch leitfähigen Flächengebildes und die zweite hitzeaktivierbare Klebmasse im Wesentlichen auf der anderen Seite des elektrisch leitfähigen Flächengebildes befindet, dadurch gekennzeichnet, dass
- die Verklebung dadurch bewirkt wird, dass das hitzeaktiviert verklebbare Flächenelement einer ersten Temperatur (T₁) ausgesetzt wird, bei der eine gleichzeitige Hitzeaktivierung der beiden hitzeaktivierbaren Klebmassen erfolgt,
- das Wiederlösen dadurch bewirkt wird, das die Verklebungsstelle (also insbesondere das hitzeaktiviert verklebte Flächenelement) einer zweiten Temperatur (T₂) ausgesetzt wird, bei der unter vorgegebenen Bedingungen lediglich eine der hitzeaktivierbaren Schichten (im weiteren - lediglich zur sprachlichen Unterscheidung - als "erste hitzeaktivierbare Klebmasse" bezeichnet) des hitzeaktivierbaren Flächenelementes ihre Klebewirkung im Klebeverbund soweit verliert, das der Klebeverbund getrennt wird.

Im Sinne dieser Anmeldung wird einheitlich von hitzeaktivierbaren Klebmassen und von einem hitzeaktiviert verklebbaren Flächenelement auch dann gesprochen, wenn diese Bausteine sich im verklebten Zustand befinden bzw. nach der Wiederlösung des Klebeverbundes, unabhängig davon, ob die Eignung zu hitzeaktivierbaren Verklebung zu diesem Zeitpunkt noch besteht oder nicht. Damit wird der Tatsache Rechnung getragen, dass die Eignung zur hitzeaktivierbaren Verklebung vor der Verklebung bestand, und dass der jeweilige Gegenstand (ggf. in modifizierter, insbesondere verklebter) Form an sich weiter besteht, solange dieser Ausdruck verwendet wird.
Sofern es relevant ist, in wieweit die Eignung im konkreten Zustand vorliegt oder nicht, wird dieses an den entsprechenden Textstellen deutlich gemacht.
In sofern umfasst beispielsweise die Bezeichnung "hitzeaktiviert verklebbares Flächenelement" in den entsprechenden Fällen auch "hitzeaktiviert verklebte Flächenelemente", sofern nichts anderen beschrieben ist.

Vor dem Einsatz des Flächenelementes handelt es sich jedenfalls um ein "hitzeaktiviert verklebbares Flächenelement" sowie bei den hitzeaktivierbaren Klebmassen um solche Klebmassen, die durch Erreichen einer Aktivierungstemperatur oberhalb der Raumtemperatur die Eignung zur Verklebung im Sinne der Anwendung ausbilden können.

Die Bezeichnung "die hitzeaktivierbare Klebmasse befindet sich im Wesentlichen auf einer Seite des Flächengebildes" bedeutet, dass die Klebmasse auf der jeweiligen Flächenelement-Seite die Verklebung vollständig oder zum Größten teil bewirkt, sich aber im konkreten Klebebandaufbau durchaus auch auf die andere Seite des elektrisch leitfähigen Flächengebildes erstrecken kann, zum Beispiel durch Überlappung an den Flächengebilde-Kanten, durch Ineinanderfließen mit der gegenüberliegenden hitzeaktivierbaren Klebmasse, zum Beispiel bei unterbrochenen elektrisch leitfähigen Flächengebilden, wie Gittern, Lochplatten und dergleichen, oder auf andere Weise, jedenfalls in soweit, als das die Verwirklichung der erfinderischen Idee hierdurch nicht beeinflusst wird. "Im Wesentlichen" berücksichtigt also den Sachverhalt, dass sich die jeweilige hitzeaktivierbare Klebmasse vollständig auf der jeweiligen Seite des elektrisch leitfähigen Flächengebildes befinden kann, aber nicht muss, soweit gewährleistet bleibt, dass die Verklebung des hitzeaktiviert verklebbaren Flächenelementes auf dem jeweiligen Substrat maßgeblich durch die jeweilige hitzeaktivierbare Klebmasse maßgeblich gewährleistet bleibt.

Als Flächenelement im Sinne dieser Anmeldung gelten insbesondere alle üblichen und geeigneten Gebilde mit im Wesentlichen flächenförmiger Ausdehnung. Diese ermöglichen eine flächige Verklebung und können verschieden ausgestaltet sein, insbesondere flexibel, als Klebefolie, Klebeband, Klebeetikett oder als Formstanzling. Das Flächenelement kann als zugeschnittenes Flächenelement ausgebildet sein, dessen Form an die Form der Verklebungsfläche angepasst ist, um die Gefahr zu verringern, dass das Verklebungssubstrat im Verlauf der induktiven Erwärmung thermisch beschädigt wird.

Flächenelemente im Sinne dieser Anmeldung weisen jeweils zwei Seitenflächen auf, eine Vorderseite und eine Rückseite. Die Begriffe Vorderseite und Rückseite beziehen sich dabei auf die beiden Oberflächen des Flächenelements parallel zu seiner Hauptausdehnung (Flächenausdehnung, Hauptausdehnungsebene) und dienen lediglich der Unterscheidung dieser beiden auf gegenüberliegenden Seiten des Flächenelements angeordneten Flächen, ohne dass durch die Wahl der Begriffe die absolute räumliche Anordnung der beiden Flächen festgelegt ist; demzufolge kann die Vorderseite auch die räumlich hinten gelegene Seitenfläche des Flächenelements darstellen, nämlich wenn dementsprechend die Rückseite dessen räumlich vorne gelegene Seitenfläche bildet.

Dieses hitzeaktiviert verklebbare Flächenelement soll zwei Verklebungssubstrate miteinander verkleben. Dafür weist das Flächenelement an beiden Seitenflächen eine hitzeaktiviert verklebbare Klebmasse auf. Hitzeaktiviert verklebbare Klebmassen sind alle Klebmassen, die bei erhöhten Temperaturen heiß verklebt werden und nach dem Erkalten eine mechanisch belastbare Verbindung bieten. Üblicherweise liegt die Klebmasse in Form einer Klebmassenschicht vor.

Als Schicht wird insbesondere eine flächenförmige Anordnung eines Systems einheitlicher Funktionalität bezeichnet, deren Abmessungen in einer Raumrichtung (Dicke oder Höhe) signifikant kleiner sind als in den beiden anderen Raumrichtungen, die die Hauptausdehnung definieren (Länge und Breite). Eine derartige Schicht kann kompakt oder auch durchbrochen ausgebildet sein und aus einem einzigen Material oder aus unterschiedlichen Materialien bestehen, insbesondere, wenn diese zur einheitlichen Funktionalität dieser Schicht beitragen. Eine Schicht kann eine über ihre gesamte Flächenausdehnung konstante Dicke aufweisen oder aber unterschiedliche Dicken. Darüber hinaus kann eine Schicht natürlich auch mehr als eine einzige Funktionalität aufweisen.

Der Begriff "hitzeaktivierbare Klebmasse" (in der Literatur auch als "wärmeaktivierbare Klebmasse" bezeichnet) bezeichnet Klebmassen, die durch Zufuhr thermischer Energie aktiviert werden und in diesem Zustand zur Anwendung appliziert werden. Durch Abkühlung wird die Verklebung bewirkt, wobei zwischen zwei Systemen zu unterscheiden ist: Thermoplastische hitzeaktivierbare Systeme (Schmelzklebstoffe) binden beim Abkühlen physikalisch ab (in der Regel reversibel), während hitzeaktivierbare Elastomer/Reaktivkomponenten-Systeme (Heißsiegelklebstoffe) chemisch abbinden (in der Regel irreversibel).
Dem Begriff "hitzeaktivierbare Klebmasse" steht es nicht entgegen, dass die entsprechende Klebmasse auch bei Raumtemperatur oder bei anderen Temperaturen unterhalb der Aktivierungstemperatur bereits eine gewisse Eigenklebrigkeit (Haftklebrigkeit, Selbstklebrigkeit) aufweisen kann ("haftklebrig" sein kann). Diese Eigenklebrigkeit unterhalb der Aktivierungstemperatur ist aber nicht erforderlich, so dass hitzeaktivierbare Klebmasse bei Temperaturen unterhalb der Aktivierungstemperatur, insbesondere bei Raumtemperatur, auch nichtklebrig sein können.

Als unterschiedliche hitzeaktivierbare Klebmassen im Sinne dieser Schrift werden insbesondere solche hitzeaktivierbaren Klebmassen verstanden, die sich derart verhalten, dass bei einer Temperatur T_{Dk}¹ ≤ T₂ - ausgehend vom verklebten Zustand - eine der hitzeaktivierbaren Klebmassen (die erste hitzeaktivierbare Klebmasse) ihre Klebewirkung ihre Klebewirkung im Klebeverbund soweit verliert, das der Klebeverbund bezüglich der Verklebung mittels dieser hitzeaktivierbaren Klebmasse getrennt wird, während die mittels der anderen hitzeaktivierbaren Klebmasse (im weiteren als "zweite hitzeaktivierbare Klebmasse" bezeichnet) bewirkte Verklebung bei der Temperatur T₂ erhalten bleibt.
Zur Trennung des Klebeverbundes (also zum Wiederlösen der Verklebung der beiden Substrate miteinander) bei der Temperatur T₂ kann es hilfreich sein, weitere Verfahrensbedingungen vorzugeben, die den Lösevorgang unterstützen; beispielsweise zusätzlich mehr oder weniger stark trennende Kräfte (Zugkräfte, Druckkräfte oder dergleichen) einzusetzen. Für die zweite hitzeaktivierbare Klebmasse gilt dann, dass sie bei der Temperatur T₂ unter der bei dem Wiederlösen des Klebeverbundes gegebenen Bedingungen, insbesondere unter Einfluss der beschriebenen Kräfte, die Verklebung mit dem Substrat, auf dem sie verklebt ist, nicht löst.

Die zweite hitzeaktivierbare Klebmasse kann vorteilhaft derart gewählt sein, dass sie ihrerseits die Verklebung mit dem Substrat, auf dem sie verklebt ist, bei einer dritten Temperatur T₃ oberhalb der Temperatur T₂ löst.

Die Trennung der jeweiligen hitzeaktivierbaren Klebmasse von dem Substrat, auf dem sie verklebt ist, kann beispielsweise dadurch erfolgen, dass die jeweilige Klebmasse bei dieser Temperatur (T₂ bzw. T₃) ihre Klebkräfte verliert oder zumindest stark einbüßt, indem sie schmilzt, erweicht und/oder sich zersetzt (Dekomposition). Weitere Mechanismen des Trennvorgangs sind möglich und von dem Grundgedanken der Erfindung mit umfasst.

In einer bevorzugten Ausgestaltung des erfindungsgemäßen Verfahrens wird die Temperatur T₁ innerhalb des hitzeaktiviert verklebbaren Flächenelementees derart erzeugt, dass das elektrisch leitfähige Flächengebilde innerhalb des hitzeaktiviert verklebbaren Flächenelementes induktiv, insbesondere in einem Magnetfeld, erhitzt wird und die Wärme an die Klebmassen weitergibt.
In einer weiteren bevorzugten Ausgestaltung wird auch die Temperatur T₂, bevorzugt auch die gegebenenfalls zu erzielende Temperatur T₃, durch induktive Erwärmung des elektrisch leitfähigen Flächengebildes hervorgerufen.

Im erfindungsgemäßen Verfahren werden vorteilhaft hitzeaktiviert verklebbare Flächenlemente eingesetzt, wie sie nachfolgeend näher ausgeführt werden und wie sie selbst Gegenstand der Erfindung sind.

Gegenstand der Erfindung ist weiterhin ein hitzeaktiviert verklebbbares Flächenelement eingesetzt wird, das hitzeaktiviert verklebbare Flächenelement zumindest ein elektrisch leitfähiges Flächengebilde sowie zumindest zwei Schichten unterschiedlicher hitzeaktivierbarer Klebmassen umfasst, wobei sich die erste hitzeaktivierbare Klebmassenschicht im Wesentlichen auf der einen Seite des elektrisch leitfähigen Flächengebildes und die zweite hitzeaktivierbare Klebmasse im Wesentlichen auf der anderen Seite des elektrisch leitfähigen Flächengebildes befindet, wobei die hitzeaktivierbaren Klebmassen derart gewählt werden, dass sie bei einer gemeinsamen Temperatur T₁ eine Verklebung bewirken, und dass bei einer Temperatur T_{Dk}¹ eine der hitzeaktivierbaren Klebmassen (die erste hitzeaktivierbare Klebmasse) ihre Klebewirkung verliert, die andere (die zweite hitzeaktivierbare Klebmasse) jedoch noch nicht.

Die Bezeichnung "im Wesentlichen" hat dieselbe Bedeutung wie bereits vorstehend definiert. Die Temperaturen, bei denen eine jeweilige hitzeaktivierbnare Klebmasse im Klebeverbund ihre Klebewirkung verliert, wird im Rahmen dieser Schrift auch als "Klebverlusttemperatur" bezeichnet.

Insgesamt kann das hitzeaktiviert verklebbare Flächenelement beliebig geeignet ausgebildet sein. So kann das Flächenelement zusätzlich zu den zuvor beschriebenen Schichten weitere Schichten enthalten, zum Beispiel permanente Träger oder temporäre Träger.

In einer vorteilhaften Ausgestaltung des erfindungsgemäßen hitzeaktivierbaren Flächenelementes sind die Aktivierungsenergien der ersten hitzeaktivierbaren Klebmasse (T_{Akt}¹) und der zweiten Klebmasse (T_{Akt}²) gleich oder unterscheiden sich so wenig, dass beide in einem Temperaturbereich liegen, in dem bei Erreichen, insbesondere nach Überschreitung, der höheren der beiden Aktivierungsenergien beide hitzeaktivierbaren Klebmassen ihre Klebrigkeit entfalten bzw. bereits entfaltet haben, ohne dass jedoch die Klebmasse mit der niedrigeren Aktivierungsenergie bereits ihre Klebrigkeit wieder eingebüßt hatte (etwa dadurch, dass sie zu dünnflüssig würde, sich zersetzte oder auf andere Weise nicht mehr zur Erzielung der erforderlichen Klebewirkung befähig wäre (dass also die Klebverlusttemperatur T_{DK} einer oder beider Klebmassen bereits erreicht wäre).

Die erste hitzeaktivierbare Klebmasse mit der niedrigeren Klebverlusttemperatur T_{DK}¹ kann diejenige mit der niedrigeren, aber auch diejenige mit der höheren Aktivierungstemperatur sein, sofern sich T_{Akt}¹ und T_{Akt}² unterscheiden. Entsprechendes gilt für die zweite hitzeaktivierbare Klebmasse mit der höheren Klebverlusttemperatur T_{DK}² oder ohne Klebverlusttemperatur.

Die Temperatur T₁ wird im erfindungsgemäßen Verfahren insbesondere derart gewählt, dass sie der höheren der beiden Aktivierungsenergien entspricht oder aber - insbesondere geringfügig - über dieser liegt, so dass beide Haftklebmassen ihre Klebrigkeit entfalten, ohne dass eine Temperatur überschritten wäre, bei der eine - oder beide - der Klebmassen ihre Klebrigkeit wieder einbüßen würden.

Die Temperaturen, bei der die hitzeaktivierbaren Klebmassen ihre Klebrigkeit einbüßen (den Erhalt des Klebeverbundes nicht mehr zu bewirken vermögen; Klebverlusttemperaturen T_{Dk}¹ der ersten hitzeaktivierbaren Klebmasse, T_{DK}² der zweiten hitzeaktivierbaren Klebmasse) unterscheiden sich dabei bevorzugt derart signifikant, dass verfahrenstechnisch eine Temperatur T₂ (oder ein Temperaturbereich T₂) realisiert werden kann, dass die Verklebung des ersten Substrats mit der ersten hitzeaktivierbaren Klebmasse mit der niedrigeren Klebverlusttemperatur T_{Dk}¹ gelöst wird, während die Verklebung des zweiten Substrats mit der zweiten hitzeaktivierbaren Klebmasse mit der höheren (oder ohne existierende) Klebverlusttemperatur T_{DK}² (noch) erhalten bleibt.

Die Temperaturen T_{Akt}¹, T_{Akt}², T_{DK}¹ und/oder T_{DK}² können scharf definierte Temperaturen sein, da es sich bei HaftKlebmassen jedoch um Polymere handelt, bei denen Phasenumwandlungen bzw. andere physikalische, chemische und/oder physikochemische Prozesse innerhalb von Temperaturbereichen stattfinden, sollen derartige Temperaturbereiche mit umfasst sein.
Die angegebene Temperatur T bezeichnet dann insbesondere die Temperatur innerhalb des jeweiligen Temperaturbereiches, bei dem der entsprechende Prozess (Hitzeaktivierung, Schmelzen, Erweichen, Zersetzung, etc) wesentlich erfolgt ist, so dass der beschrieben Erfolg im Verfahren (also die Verklebung bzw. das Wiederlösen) eintritt.

Die Verfahrenstemperatur T₁ bezeichnet eine Temperatur gleich oder oberhalb der Aktivierungstemperaturen T_{Akt}¹ und T_{Akt}² der hitzeaktivierbaren Klebmassen.
Die Verfahrenstemperatur T₂ bezeichnet eine Temperatur gleich oder oberhalb der Klebverlusttemperatur T_{DK}¹ der ersten hitzeaktivierbaren Klebmasse; sofern auch die zweite hitzeaktivierbare Klebmasse eine Klebverlusttemperatur T_{DK}² besitzt, liegt T₂ unterhalt T_{DK}². Die Verfahrenstemperatur T₃ bezeichnet eine Temperatur gleich oder oberhalb der Klebverlusttemperatur T_{DK}^{2*}.

Wie bereist dargelegt kommen als Klebverlusttemperaturen der hitzeaktivierbaren Klebmassen unabhängig von der jeweils anderen hitzeaktivierbaren Klebmasse insbesondere deren jeweilige Schmelztemperatur, Erweichungstemperatur, Zersetzungstemperatur oder ähnliches in Frage; wobei der Klebeverlust beider hitzeaktivierbaren Klebmassen natürlich auch auf denselben Effekt zurückzuführen sein kann.

Eine vorteilhafte Ausführungsform der erfindungsgemäßen Klebebänder betrifft ein hitzeaktiviert verklebbares Flächenelement, umfassend zumindest ein elektrisch leitfähiges Flächengebilde sowie zumindest jeweils eine Schicht einer hitzeaktivierbaren Klebmassen auf den beiden Seiten des elektrisch leitfähigen Flächengebildes, wobei sich die beiden hitzeaktivierbaren Klebmassen unterscheiden, und wobei die Aktivierungstemperaturen zur Erzielung der Klebeeigenschaften der hitzeaktivierbaren Klebmassen sich weniger unterscheiden als deren Klebverlusttemperaturen, insbesondere als deren Schmelztemperaturen und/oder als deren Zersetzungstemperaturen.

Die erfindungsgemäßen hitzeaktiviert verklebbaren Flächenelemente und das erfindungsgemäße Verfahren sind insbesondere geeignet zur Verklebungen zwischen zumindest zwei gleichen oder verschiedenen elektrisch nichtleitenden Materialien (Substrate im Sinne des oben verwendeten Begriffes), insbesondere solchen mit Wärmeleitungskoeffizienten von jeweils weniger als 5 W/mK, besonders bevorzugt in elektronischen Geräten.

Erfindungsgemäß kann die Verklebung in einem für beide gleichen Temperaturbereich durchgeführt werden, indem beide Klebmassen die vollständige Verklebungsfeestigkeit erzeilen (ohne dass eines der Materialien nicht seine vollständige Verklebungsfestigkeit erreicht, z.B. durch unvollständiges Aushärten oder Aufschmelzen). Vorteilhaft wird keines der beteiligten materilaien (Substrate, Klebmassen) durch zu hohe Temperatur geschädigt wird.
Durch die Wahl der Temperatur T₂ beim Lösen der Verbindung, insbesondere einer niedrigeren Temperatur, kann zudem sicher vorherbestimmt werden, auf welchem Fügepartner das elektrisch leitfähige Flächengebilde haften bleibt. Dies ist für den Recyclingvorgang der insbesondere elektronischen Geräte vorteilhaft, insbesondere füpr eine saubere Materialsortierung.

Überraschend ist es gelungen, trotz zweier unterschiedlicher Klebersysteme und in dem verklebbaren Flächenelement vorliegenden zusätzlichen Grenzschichten an dem elektrisch leitfähigen Flächengebilde Verklebungsfestigkeiten zu erreichen, die sonst nur mit Monosystemen, wie z.B. partikelgefüllten Klebstoffen, die homogen in der Klebefuge vorliegen, erreicht werden.

In einer besonders vorteilhaften Ausführung weist das hitzeaktiviert verklebbare Flächenelement eine Dicke von weniger als 70 µm, insbesondere von weniger als 50 µm, ganz besonders von weniger als 30 µm auf, da hiermit besonders dünne Klebverbindungen hergestellt werden können..

Von der Erfindung umfasst ist ein Verfahren zur Herstellung einer Klebeverbindung, bei dem ein erfindungsgemäßes hitzeaktiviert verklebbares Flächenelement insbesondere in der Geometrie der herzustellenden Klebeverbindung (z.B. als Zuschnitt oder Stanzling) zur Verfügung gestellt wird,
- dieses Flächenelement in die Klebefuge appliziert wird,
- die Klebefuge mit Druck beaufschlagt wird, wobei der Druck durch eine Pressvorrichtung aufgebracht wird, von der zumindest ein Presswerkzeug eine Vorrichtung zur Erzeugung eines magnetischen Wechselfeldes enthält,
- und das Flächenelement mittels Induktion auf eine Temperatur erwärmt wird, bei der beide Klebersysteme aktiviert werden

Weiterhin von der erfindung umfasst ist ein Verfahren zum Lösen einer Klebverbindung, insbesondere in Folge des zuvor dargestellten Verfahrens zur Herstellung einer klebeverbindung, bei dem eine mit einem erfindungsgemäßen hitzeaktiviert verklebbaren Flächenelement Klebeband hergestellte Klebeverbindung mittels Induktion erwärmt wird, dadurch gekennzeichnet, dass
- die niedrigere der für die beiden hitzeaktivierbaren Klebemasen zum Herabsetzen der Adhäsion und/oder der Kohäsion erforderlichen Temperaturen nicht wesentlich überschritten wird.

Die Erwärmung des erfindungsgemäßen Flächenelementes lässt sich unter Verwendung eines zum induktiven Erwärmen üblichen Induktionsheizmittel (Induktors) durchführen. Als Induktionsheizungsmittel (Induktor) kommen alle üblichen und geeigneten Anordnungen in Frage, also etwa von einem elektrischen Wechselstrom durchflossene Spulen, Leiterschleifen oder Leiter, die infolge des hindurchfließenden Stroms ein Magnet-Wechselfeld geeigneter Stärke erzeugen. So kann die zum Erwärmen erforderliche Magnetfeldstärke durch eine Spulenanordnung von entsprechender Wicklungszahl und Spulenlänge bereit gestellt werden, die von einem entsprechenden Strom durchflossen ist, beispielsweise als Punktinduktor. Diese kann ohne ferromagnetischen Kern ausgebildet sein oder aber einen Kern aufweisen, beispielsweise aus Eisen oder gepresstem Ferritpulver. Der Vorverbund kann dem so erzeugten Magnetfeld direkt ausgesetzt sein. Alternativ ist es natürlich auch möglich, obige Spulanordnung als Primärwicklung auf der Primärseite eines Magnetfeldübertragers (Transformator) anzuordnen, auf dessen Sekundärseite eine Sekundärwicklung einen entsprechend höheren Strom bereitstellt. Dadurch kann die in der unmittelbaren Nähe des Vorverbunds angeordnete eigentliche Erregerspule infolge des höheren Stroms eine geringere Zahl an Windungen aufweisen, ohne dass dadurch die Feldstärke des Magnet-Wechselfeldes verringert wird.

Für den Fall, dass der Vorverbund während des induktiven Erwärmens mit einem Pressdruck beaufschlagt wird, ist hierfür zusätzlich eine Pressvorrichtung erforderlich. Als Pressvorrichtung können alle zum Ausüben eines Pressdrucks geeigneten Vorrichtungen eingesetzt werden, zum Beispiel diskontinuierlich arbeitende Pressmaschinen wie etwa eine Pneumatik- oder Hydraulikpresse, eine Exzenterpresse, eine Kurbelpresse, eine Kniehebelpresse, eine Spindelpresse oder dergleichen, oder auch kontinuierlich arbeitende Pressmaschinen wie etwa eine Presswalze. Die Vorrichtung kann als separate Einheit vorgesehen sein oder aber mit dem Induktor verbunden vorliegen. Bevorzugt kommt etwa eine Vorrichtung zum Einsatz, die als erstes Presswerkzeug zumindest ein Pressstempelelement enthält, das zudem ein Induktionsheizungsmittel aufweist. Dadurch kann das Induktionsfeld sehr nah an die zu bildende Verklebungsstelle herangeführt werden und somit auch räumlich auf die Fläche dieser Verklebungsstelle begrenzt werden.

Vorteilhaft können für die induktive Erwärmung folgende Parameter gewählt werden:
- eine Frequenz zwischen 1 und 200 kHz, da bei niedrigen Frequenzen höhere Eindringtiefen erzielt werden können und eine bessere Kontrolle der Aufheizrate möglich ist. Besonders bevorzugt werden bei dem Verfahren Frequenzen von 1 bis 40 kHz, insbesondere von 1 bis 15 kHz eingesetzt, da hierbei die wirksame Eindringtiefe des Magnetfelds weiter vergrößert ist.
- Durchführung der Aufheizung in einer Zeit von weniger als 20 s auf eine Temperatur von mehr als 70 °C.

Besonders vorteilhaft wird das Verfahren verwendet, wenn die die erwärmte Fläche kleiner als 5 cm² ist. Überraschend kann mit dem Verfahren ein unkontrolliertes Aufschmelzen der dann sehr filigranen Verklebungssubstrate vermieden werden.

Besonders vorteilhaft wird das Verfahren weiterhin verwendet, wenn die Klebefuge als eine nicht geschlossene Fläche ausgebildet ist. Darunter sind einerseits von Aussparungen und/oder durchbrochene Flächen zu verstehen, andererseits auch im Wesentlichen aus linienförmigen Elementen zusammengesetzte Flächen, z.B. eine Kammstruktur, bei denen einzelne Elemente ein Aspektverhältnis (Länge zu Breite) von mehr als 2 aufweisen.

In einer besonders vorteilhaften Ausführung des Verfahrens wird beim Erwärmen ein Pressdruck ausgeübt, der mehr als 0,2 MPa beträgt. Hiermit kann eine Blasenbildung durch desorbierende oder in einer chemischen Reaktion entstehende Gase, insbesondere durch Wasserdampf, vermieden werden. Bevorzugt für hohe Vernetzungstemperaturen ist ein Druck von mehr als 0,5 MPa.

In einer weitern, besonders vorteilhaften Ausführung des Verfahrens beträgt der Druck hingegen weniger als 0,2 MPa, da hiermit ein Ausquetschen von Kleber, insbesondere von thermoplastischem Kleber, aus der Klebefuge vermieden werden kann.

In einer besonders vorteilhaften Ausführung beträgt die Aufheizrate nicht mehr als 200 °C/s, , insbesondere nicht mehr als 100 °C/s, da bei höheren Aufheizraten die Gefahr der Materialschädigung der hitzeaktivierbaren Klebmasse oder des unkontrollierten Aufschmelzens bzw. einer thermischen Schädigung des Substrats groß ist. Eine solche Begrenzung der Aufheizrate kann z.B. mit der Verwendung von weniger elektrisch leitfähigen Metallen (z.B. Aluminium statt Kupfer oder Stahl statt Aluminium) erreicht werden. Ein weiteres technisches Mittel zur Begrenzung der Aufheizrate ist die Verwendung von durchbrochenen metallischen Flächengebilden, z.B. von Streckmetall).

In einer weiteren vorteilhaften Ausführung des Verfahrens wird nach dem Erwärmen des Flächenelementes der Druck aufrechterhalten, um eine Verfestigung der Klebefuge durch physikalische oder chemische Mechanismen zu ermöglichen. Vorteilhaft ist es auch, diese Nachpresszeit in einer zweiten Pressvorrichtung durchzuführen, die keinen Induktor mehr enthalten muss, um damit die Zykluszeit zu reduzieren.

In einer weiteren vorteilhaften Ausführung des Verfahrens wird in zumindest einem Teil dieser Nachpresszeit auch eine weitere Induktionserwärmung des Klebebands durchgeführt, da hiermit vorteilhaft die Temperatur in der Klebefuge aufrechterhalten werden kann. Vorteilhaft wird diese Nacherwärmung mit einer geringeren Aufheizrate durchgeführt, als die Ersterwärmung.

Dadurch, dass das Klebeband bevorzugt in der Geometrie der Verklebungsfläche zur Verfügung gestellt wird, wird sichergestellt, dass das Aufheizen nur in den für die Verklebung benötigten Bereichen stattfindet. Die Gefahr von thermischen Schädigungen ist somit verringert. Die Herstellung der Geometrie kann durch alle dem Fachmann geläufigen Verfahren wie z.B. Schneiden, Stanzen, Laserschneiden, Wasserstrahlschneiden erfolgen.

Vorteil des Verfahrens ist es weiterhin, dass der Induktor in zumindest einem der Presswerkzeuge integriert ist, da hiermit das Induktionsfeld sehr nah an die Verklebungsstelle herangebracht werden kann und auch räumlich auf diese begrenzt werden kann.

### Hitzeaktivierbare Klebmassen

Als hitzeaktivierbare Klebmassen können insbesondere Schmelzklebstoffe, reaktive Klebstoffe oder reaktive Schmelzklebstoffe eingesetzt werden.

Bevorzugt besitzt die erste hitzeaktivierbare Klebmasse eine Klebverlusttemperatur (T_{DK}¹), die zwischen 10 und 20 °C, bevorzugt zwischen 20 und 50 °C, besonders bevorzugt zumindest 50 °C oberhalb der Aktivierungstemperatur (T_{Akt}^{2*}) der zweiten hitzeaktivierbaren Klebmasse liegt. Damit ist sichergestellt, dass innerhalb eines Aufheizzyklusses beide Klebmassen sicher aktiviert werden können, ohne bereits für den ersten Kleber den Ablösemechanismus (die Dekomposition) zu aktivieren. Bei einer Differenz von 10 - 20 °C ist die zum Trennen der Verbindung notwendige Temperatur relativ niedrig, so dass Aufheizzeit und/oder Energie gespart werden können.
Bei einer Differenz der vorstehend genanten Temperaturen (T_{DK}¹, E_{Akt}²) von mehr als 50 °C ist das Verfahren sehr sicher, da in der Temperaturführung beim Verkleben größere Toleranzen zugelassen werden.
Der Bereich einer Temperaturdifferenz von 20 °C bis 50 °C ist vorteilhafter Kompromiss zwischen beiden Varianten.

In einer besonders bevorzugten Ausführung ist die erste hitzeaktivierbare Klebmasse ein reaktiven Klebstoff oder umfasst einen solchen oder ist ein reaktiver Schmelzklebstoff oder umfasst einen solchen, und/oder die zweite hitzeaktivierbare Klebmasse ist ein Schmelzklebstoff oder umfasst einen solchen, wobei sehr bevorzugt die Schmelztemperatur des Schmelzklebstoff kleiner als die Zersetzungstemperatur (Dekompositionstemperatur) des reaktiven Systems gewählt ist.

Dadurch kann ein Lösen der Klebverbindung ohne chemische Zersetzung (Dekomposition) und damit möglicher Gefährdung durch dabei entstehende Gase oder andere Zersetzungsprodukte erfolgen.

In einer weiteren bevorzugten Ausführung sind zumindest der einen hitzeaktivierbaren Klebmasse Anteile von zumindest einem Material beigesetzt, die die Dekomposition beschleunigen oder die bevorzugt dekompositionieren und so die Klebverbindung schwächen und zur Lösung derselben führen. Beispiele hierfür sind dem Fachmann bekannt und z.B. in der US 5,272,216 dargestellt. Die entsprechenden dort dargestellten Materialien seien in den Offenbarungsumfang der vorliegenden Schrift explizit eingeschlossen.

Als die zumindest eine hitzeaktiviert verklebbare Klebmasse können grundsätzlich alle üblichen hitzeaktiviert verklebbaren Klebmassensysteme zum Einsatz gelangen. Hitzeaktiviert verklebbare Klebmassen lassen sich grundsätzlich in zwei Kategorien einordnen: thermoplastische hitzeaktiviert verklebbare Klebmassen (Schmelzklebstoffe) und reaktive hitzeaktiviert verklebbare Klebmassen (Reaktivklebstoffe). Diese Einteilung enthält auch solche Klebmassen, die sich beiden Kategorien zuordnen lassen, nämlich reaktive thermoplastische hitzeaktiviert verklebbare Klebmassen (reaktive Schmelzklebstoffe).

Thermoplastische Klebmassen basieren auf Polymeren, die bei einem Erwärmen reversibel erweichen und während des Erkaltens wieder erstarren. Im Gegensatz dazu enthalten reaktive hitzeaktiviert verklebbare Klebmassen reaktive Komponenten. Letztere Bestandteile werden auch als "Reaktivharze" bezeichnet, in denen durch das Erwärmen ein Vernetzungsprozess eingeleitet wird, der nach Beendigen der Vernetzungsreaktion eine dauerhafte stabile Verbindung auch unter Druck gewährleistet. Bevorzugt enthalten derartige thermoplastische Klebmassen auch elastische Komponenten, zum Beispiel synthetische Nitrilkautschuke. Derartige elastische Komponenten verleihen der hitzeaktiviert verklebbaren Klebmasse infolge ihrer hohen Fließviskosität eine auch unter Druck besonders hohe Dimensionsstabilität.

Im Folgenden sind rein exemplarisch einige typische Systeme hitzeaktiviert verklebbarer Klebmassen beschrieben, die sich im Zusammenhang mit der vorliegenden Erfindung als besonders vorteilhaft herausgestellt haben.

Eine thermoplastische hitzeaktiviert verklebbare Klebmasse enthält also ein thermoplastisches Basispolymer. Dieses weist bereits bei geringem Anpressdruck ein gutes Fließverhalten auf, so dass sich die für die Haltbarkeit einer dauerhaften Verklebung relevante finale Klebkraft innerhalb kurzer Anpresszeit einstellt und daher ein schnelles Verkleben auch auf rauem oder anderweitig kritischem Untergrund möglich ist. Als thermoplastische hitzeaktiviert verklebbare Klebmassen können alle aus dem Stand der Technik bekannten thermoplastischen Klebmassen verwendet werden.

Geeignet sind beispielsweise solche hitzeaktivierbaren Klebmassen, wie sie in der DE 10 2006 042 816 A1 beschrieben sind, ohne sich durch diese Angaben beschränken zu wollen.

Exemplarische Zusammensetzungen sind etwa in EP 1 475 424 A1 beschrieben. So kann die thermoplastische Klebmasse beispielsweise eine oder mehrere der folgenden Komponenten enthalten oder sogar aus diesen bestehen: Polyolefine, Ethylen-VinylacetatCopolymere, Ethylen-Ethylacrylat-Copolymere, Polyamide, Polyester, Polyurethane oder Butadien-Styrol-Blockcopolymere. Bevorzugt kommen etwa die in Absatz [0027] von EP 1 475 424 A1 aufgeführten thermoplastischen Klebmassen zum Einsatz. Weitere thermoplastische Klebmassen, die insbesondere für spezielle Einsatzgebiete wie zum Beispiel das Verkleben von Verklebungssubstraten aus Glas besonders geeignet sind, sind in EP 1 95 60 63 A2 beschrieben. Bevorzugt werden thermoplastische Klebmassen verwendet, deren Schmelzviskosität durch rheologische Additive heraufgesetzt ist, beispielsweise durch Zusatz von pyrogenen Kieselsäuren, Ruß, Kohlenstoff-Nanoröhren und/oder weiteren Polymeren als Abmischkomponenten.

Eine reaktive hitzeaktiviert verklebbare Klebmasse weist hingegen vorteilhafterweise ein elastomeres Basispolymer und ein Modifikationsharz auf, wobei das Modifikationsharz ein Klebharz und/oder ein Reaktivharz umfasst. Infolge der Verwendung eines elastomeren Basispolymers ist es möglich, Klebeschichten mit hervorragender Dimensionsstabilität zu erhalten. Als reaktive hitzeaktiviert verklebbare Klebmassen können entsprechend den jeweiligen konkreten Anwendungen alle aus dem Stand der Technik bekannten hitzeaktiviert verklebbaren Klebmassen eingesetzt werden.

Dies beinhaltet zum Beispiel auch reaktive hitzeaktiviert verklebbare Folien auf Basis von Nitrilkautschuken oder deren Derivaten wie etwa Nitrilbutadienkautschuke oder Mischungen (Blends) dieser Basispolymere, die zusätzlich Reaktivharze wie etwa Phenolharze enthalten; ein derartiges Produkt ist etwa unter der Bezeichnung tesa 8401 kommerziell erhältlich. Der Nitrilkautschuk verleiht der hitzeaktiviert verklebbaren Folie infolge seiner hohen Fliessviskosität eine ausgeprägte Dimensionsstabilität, wodurch sich nach Durchführen einer Vernetzungsreaktion hohe Klebkräfte auf Kunststoffoberflächen realisieren lassen.

Natürlich lassen sich auch andere reaktive hitzeaktiviert verklebbare Klebmassen einsetzen wie etwa Klebmassen, die zu einem Masseanteil von 50 bis 95 Gew.-% ein verklebbares Polymer und zu einem Masseanteil von 5 bis 50 Gew.-% ein Epoxidharz oder eine Mischung aus mehreren Epoxidharzen enthalten. Das verklebbare Polymer enthält hierbei vorteilhafterweise zu 40 bis 94 Gew.-% Acrylsäureverbindungen und/oder Methacrylsäureverbindungen der allgemeinen Formel CH₂=C(R¹)(COOR²) (R¹ stellt hierbei einen Rest dar, der ausgewählt ist aus der Gruppe umfassend H und CH₃, und R² stellt einen Rest dar, der ausgewählt ist aus der Gruppe umfassend H und lineare oder verzweigte Alkylketten mit 1 bis 30 Kohlenstoffatomen), zu 5 bis 30 Gew.-% ein erstes copolymerisierbares Vinylmonomer, das zumindest eine Säuregruppe aufweist, insbesondere eine Carbonsäuregruppe und/oder Sulfonsäuregruppe und/oder Phosphonsäuregruppe, zu 1 bis 10 Gew.-% ein zweites copolymerisierbares Vinylmonomer, das zumindest eine Epoxidgruppe oder eine Säureanhydridfunktion aufweist, und zu 0 bis 20 Gew.-% ein drittes copolymerisierbares Vinylmonomer, das zumindest eine funktionelle Gruppe aufweist, die sich von der funktionellen Gruppe des ersten copolymerisierbaren Vinylmonomers und von der funktionellen Gruppe des zweiten copolymerisierbaren Vinylmonomers unterscheidet. Eine derartige Klebmasse ermöglicht ein Verkleben mit einer schnellen Aktivierung, bei der innerhalb kurzer Zeit bereits die finale Klebkraft erreicht wird, so dass hierdurch insgesamt eine gut haftende Verbindung auf unpolarem Untergrund gewährleistet ist.

Eine weitere einsetzbare reaktive hitzeaktiviert verklebbare Klebmasse, die besondere Vorteile bietet, enthält zu 40 bis 98 Gew.-% ein acrylathaltiges Blockcopolymer, zu 2 bis 50 Gew.-% eine Harzkomponente und zu 0 bis 10°Gew.-% eine Härterkomponente. Die Harzkomponente enthält eines oder mehrere Harze, die gewählt werden aus der Gruppe umfassend die Klebkraft steigernde (klebrig machende) Epoxidharze, Novolakharze und Phenolharze. Die Härterkomponente wird zum Vernetzen der Harze aus der Harzkomponente eingesetzt. Eine derartige Formulierung bietet infolge der starken physikalischen Vernetzung innerhalb des Polymers den besonderen Vorteil, dass sich Klebeschichten mit einer größeren Gesamtdicke erhalten lassen, ohne dass dabei die Belastbarkeit der Verklebung insgesamt beeinträchtigt wird. Dadurch sind diese Klebeschichten besonders geeignet, Unebenheiten im Untergrund auszugleichen. Überdies weist eine solche Klebmasse eine gute Alterungsbeständigkeit und ein nur geringes Ausgasungsverhalten auf, was bei vielen Verklebungen im Elektronikbereich besonders erwünscht ist.

Wie bereits vorstehend erwähnt, lassen sich außer diesen besonders vorteilhaften Klebmassen jedoch grundsätzlich auch alle anderen hitzeaktiviert verklebbaren Klebmassen entsprechend dem jeweiligen Anforderungsprofil für die Verklebung auswählen und einsetzen.

Weiterhin vorteilhaft werden auch reaktive Haftklebstoffe, insbesondere auch solche, die sich für Strukturelles Kleben eignen, eingesetzt. Solche Klebmassen offenbaren beispielsweise die Schriften DE 199 05 800 B4 und EP 0 881 271 B1, deren diesbezüglicher Offenbarungsgehalt in die Offenbarung dieser Schrift eingeschlossen werden soll.

In einer vorteilhaften Ausführung der Erfindung werden beide hitzeaktivierbaren Klebmassen so ausgewählt, dass nach einer Herstellung der Verklebung durch Erwärmung des hitzeaktivierbar verklebbaren Flächenelementes durch magnetische Induktion die Verklebungsfestikeit im statischen Scherversuch auf Polycarbonat größer als 100 MPa ist, bevorzugt zwischen 100 und 300 MPa liegt und ganz besonders bevorzugt größer als 400 MPa ist.

Vorteilhaft ist weiterhin, wenn zumindest eine der beiden, möglicherweise aber auch beide, hitzeaktivierbaren Klebmassen nur partiell beschichtet auf dem elektrisch leifähigen Flächengebilde vorliegt, etwa in Form von geometrischen Flächen (z.B. Punkten, Dreiecken, Rauten oder Hexagonen) oder linienförmigen Mustern (z.B. Stegen, Linien, Gittern oder Wellen). Dadurch kann eine weitere Differenzierung der Trennkraft auf den beiden Seiten erreicht werden.

In einer weiteren vorteilhaften Varianter der Erfindung sind die hitzeaktivierbaren Klebmassenschichten unterschiedlich dick ausgeführt. Dies hat den Vorteil, dass Klebkraftunterschiede der verschiedenartigen Klebmassen durch höhere bzw. geringere Schichtdicke ausgeglichen werden können.

### Elektrisch leitfähige Flächengebilde

Grundsätzlich kann das zumindest eine elektrisch leitende Flächengebilde beliebig geeignet ausgebildet sein, beispielsweise als dünne vollflächig-kompakte oder durchbrochene Schicht (beispielsweise als Gitter). Bevorzugt beträgt die Schichtdicke der elektrisch leitenden Schicht weniger als 50 µm, insbesondere weniger als 20 µm oder sogar weniger als 10 µm. Letzteres ermöglicht es, die Aufheizgeschwindigkeit nach oben hin auf relativ einfache Weise zu begrenzen.

Als induktiv erwärmbares Material des elektrisch leitfähigen Flächengebildes werden insbesondere solche insbesondere schichtförmigen Materialien gewählt, wie sie aus dem Stand der Technik an sich hierfür bekannt sind. Als elektrisch leitende Schicht wird jede Schicht aus mindestens einem Material angesehen, das bei einer Temperatur von 23 °C eine Leitfähigkeit (Elektronen und/oder Löcher) von mindestens 1 mS/m aufweist, so dass in diesem ein elektrischer Stromfluss auftreten kann. Dies sind insbesondere Metalle, Halbmetalle sowie andere metallische Materialien und gegebenenfalls auch Halbleiter, in denen der elektrische Widerstand gering ist. Damit ist der elektrische Widerstand der elektrisch leitenden Schicht also einerseits hoch genug, um beim Fließen eines elektrischen Stroms in der Schicht eine Erwärmung der Schicht zu ermöglichen, andererseits aber auch niedrig genug, um einen Stromfluss durch die Schicht überhaupt zu etablieren. Als Sonderfall sind als elektrisch leitende Schichten auch Schichten aus Materialien anzusehen, die einen niedrigen magnetischen Widerstand aufweisen (und somit eine hohe magnetische Leitfähigkeit oder magnetische Permeabilität), beispielsweise Ferrite, obgleich diese häufig einen bei Wechselstrom niedriger Frequenzen höheren elektrischen Widerstand aufweisen, so dass hier eine Erwärmung häufig erst bei tendenziell höheren Magnet-Wechselfeldfrequenzen erreicht wird.

Bevorzugt werden zum Beispiel elektrisch leitfähige flächige Materialien (Flächengebilde) eingesetzt, da diese mit niedrigen Frequenzen erwärmt werden können, was eine höhere Eindringtiefe des Magnetfelds sowie geringere Anlagenkosten zur Folge hat. Bevorzugt haben diese elektrisch leitfähigen Flächengebilde eine Dicke von wenige als 50 µm, insbesondere weniger als 20 µm und ganz besonders weniger als 10 µm, da die Klebebänder mit abnehmender Dicke des elektrisch leitenden Flächengebildes flexibler werden. Hiermit können besonders dünne Klebebänder zur Verfügung gestellt werden; zudem kann die Menge des auf dem einen Fügeteil verbleibenden elektrisch leitfähigen Materials vermindert werden.

In einer vorteilhaften Ausgestaltungsform weist die elektrisch leitende Schicht des hitzeaktiviert verklebbaren Flächenelements eine Schichtdicke von weniger als 20 µm auf, insbesondere von weniger als 10 µm, um dessen Aufheizgeschwindigkeit auf besonders einfache Weise zu begrenzen. Darüber hinaus kann das Flächenelement eine weitere hitzeaktiviert verklebbare Klebmassenschicht aufweisen. Ein derartiges Flächenelement ist als zweiseitig verklebbares Flächenelement besonders geeignet, um zwei Verklebungssubstrate miteinander zu verbinden.

Bevorzugt ist die elektrisch leitende Schicht dabei zusätzlich auch magnetisch, insbesondere ferromagnetisch oder paramagnetisch. Wenngleich für derartige Materialien erwartet wurde, dass in diesen zusätzlich zu einer Induktion von Wirbelströmen auch eine Erwärmung durch Hystereseverluste auftritt und die Erwärmungsgeschwindigkeit insgesamt größer ausfällt, so wurde hingegen beobachtet, dass selbst magnetische Materialien wie Nickel oder magnetische Stähle, die den elektrischen Strom gut leiten, durchweg geringere Erwärmungsgeschwindigkeiten haben als Materialien, die zwar den elektrischen Strom sehr gut leiten, selbst aber nicht magnetisch sind, beispielsweise Kupfer oder Aluminium. Daher lässt sich durch Verwendung von magnetischen, den elektrischen Strom leitenden Materialien die Erwärmung leichter kontrollieren und das Auftreten von Erwärmungseffekten abseits der Klebefuge vermindern.

Ferner ist es günstig, wenn die elektrisch leitende Schicht eine elektrische Leitfähigkeit von mehr als 20 MS/m aufweist (was beispielsweise durch Verwendung von Aluminium erreicht werden kann), insbesondere von mehr als 40 MS/m (was beispielsweise durch Verwendung von Kupfer oder Silber erreicht werden kann), jeweils bestimmt für 300 K. Auf diese Weise lassen sich die zur Herstellung hoher Festigkeiten der Klebverbindung erforderlichen ausreichend hohen Temperaturen in der Klebefuge sowie eine homogene Durchwärmung auch in sehr dünnen Flächenelementen realisieren. Überraschenderweise wurde beobachtet, dass die Erwärmung infolge induzierter Wirbelströme mit der zunehmenden Leitfähigkeit steigt und nicht, wie erwartet, mit zunehmendem elektrischem Widerstand.

### Experimenteller Teil

### Beispiel:

Als hitzeaktivierbare Klebmasse wurden hitzeaktivierbare Klebmassenfolien auf unterschiedlicher chemischer Basis in untersachiedlichen Dicken eingesetzt (siehe Tabelle). Hierzu konnte zum Teil auf kommerziell erhältliche hitzeaktivierbare Folien (tesa SE) zurückgegriffen werden.
Um dünnere als die kommerziell erhältlichen Klebmassendicken zu erreichen, wurden dickere Produkte in 2-Butanon aufgelöst und aus der Lösung Klebemassenschichten in der benötigten Dicke durch Ausstreichen und Trocknen hergestellt.

Als elektrisch leitfähiges Flächengebilde zur Induktionserwärmung wurde eine Aluminiumfolie mit der Dicke 36 µm verwendet. Die Metallfolie wurde beidseitig jeweils mit den Kleberschichten bei einer Temperatur von ca. 90 °C zusammenlaminiert. Dabei wird die chemische Vernetzungsreaktion noch nicht gestartet, sondern lediglich eine Haftung herbeigeführt.

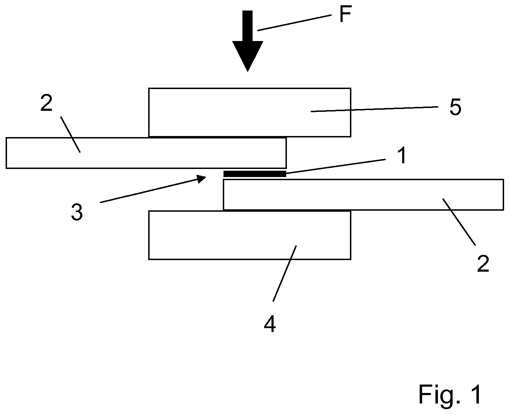

Als Verklebungssubstrate für das erfindungsgemäße Klebeband 1 wurden 2 Polycarbonatplatten 2 mit 20 mm Breite, 100 mm Länge und 3 mm Dicke verwendet, die in der Klebefuge 3 um 10 mm überlappten (vgl. Fig. 1). Die Verklebungsfläche umfasste hier also ein Rechteck von 10 x 20 mm Kantenlänge. Um das differentielle Trennen des Klebebands zu untersuchen, wurden die Fügepartner aus dem gleichen Material gewählt. In der Figur 1 sind weiterhin schematisch das untere Pressstempelelement 4, das obere Pressstempelelement 5 sowie die Kraft F dargestellt.

Das Verklebungsverfahren wurde mit Hilfe einer modifizierten Induktionsanlage des Typs EW5F der Firma IFF GmbH, Ismaning, durchgeführt. Als Induktor zum lokalen Bereitstellen des Magnet-Wechselfeldes dient hier ein Induktionsfeldübertrager, der aus lediglich einem wassergekühlten stromdurchflossenen Leiter besteht, der als Sekundärspulenkreis eines Transformatorfeldübertragers eingesetzt wird und in einem Koaxialtransformator mit dem primärspulenseitig erzeugten Übertragerfeld in Wechselwirkung tritt. Der Induktionsfeldübertrager wurde in eine Matrix aus Polyetheretherketon (PEEK) eingebettet und die so erhaltene Anordnung als unteres Pressstempelelement 4 einer Pressvorrichtung eingesetzt, die zudem ein oberes Pressstempelelement 5 aufweist. Der Anpressdruck aufgrund der Kraft F, mit dem der Vorverbund zwischen dem unteren Pressstempelelement 4 und dem oberen Pressstempelelement 5 senkrecht zu den Seitenflächen des hitzeaktiviert verklebbaren Flächenelements beaufschlagt wurde, betrug jeweils 2 MPa.
Mit Hilfe der modifizierten Induktionsanlage wurden für die Untersuchungen Magnet-Wechselfelder einer Frequenz von 20 kHz bei einer Pulsweite von 30 % erzeugt. Die Pulsweite gibt den prozentualen Anteil der Pulsdauer (Pulslänge) des Magnet-Wechselfelds an der Gesamtperiodendauer (der Summe aus Pulsdauer und der Dauer der Pausen zwischen zwei aufeinanderfolgenden Pulsen) des Magnet-Wechselfelds an.
Die Zeit, in der das hitzeaktiviert verklebbare Flächenelement dem gepulsten Magnet-Wechselfeld ausgesetzt war (also die Dauer der induktiven Erwärmung), wurde derart eingestellt, dass die jeweils angegebenen Temperaturen erreicht wurden, und lag insbesondere in einem Bereich von 1 bis 6 s.

Alle Versuche wurden zudem mit einer Nachpresszeit von 5 s durchgeführt, innerhalb derer eine induktive Nacherwärmung in einem Magnet-Wechselfeld derselben Frequenz wie beim thermischen Aktivieren der Klebemassen bei einer Pulsweite von 20 % erfolgte (entsprechend einem Verhältnis von Pulsdauer zu Pausendauer von 1 : 4).

Als Messgröße wurde die Verklebungsfestigkeit im dynamischen Zugscherversuch in Anlehnung an DIN 53283 bei 23 °C und einer Prüfgeschwindigkeit von 1 mm/min ausgewählt. Alle Versuche wurden 10 Mal wiederholt.

Zur Lösung (Trennung) der Verklebung wurde auf die u.a. Temperaturen ohne nennenswerten Anpressdruck induktiv aufgeheizt, dann die Probestäbe der Induktionspresse entnommen und sogleich in der Wärme durch Biegung mit der Hand getrennt.

**Folgende Tabelle zeigt die Beispiele:**

| Hitzeaktivierbare Klebemassenfolien (HAF) | | | |
|---|---|---|---|
| HAF Nr. | Basis | Dicke | Eingesetzt als kommerzielles Produkt: tesa ® ... |
| HAF1 | N/P | 30 | 8435 |
| HAF2 | N/P | 30 | 8471 |
| HAF3 | PA | 40 | 8440 |
| HAF4 | PET | 100 | 8464 |
| HAF5 | SR/EP | 35 | 8865 |
| HAF6 | N/P | 100 | 8454 |

### Abkürzungen:

N/P. Nitrilkautschuk/Phenolharz
PA: Copolyamid
PET: Copolyester
SR/EP: Snthesekautschuk/Epoxidharz

| Beispiel | Klebmasse Seite 1 | Klebmasse Seite 2 | | | Festigkeit [MPa] | Trennung auf Seiten |
|---|---|---|---|---|---|---|
| | HAF Nr. | HAF Nr. | Verklebungstemperatur (T₁) [°C] | Lösungstemperatur (T₂) [°C] | | |
| 1 | HAF1 | HAF3 | 110 | 180 | 4 | alle Seite 2 |
| 2 | HAF2 | HAF4 | 120 | 180 | 6 | alle Seite 2 |
| 3 | HAF3 | HAF4 | 115 | 160 | 7 | alle Seite 1 |
| 5 | HAF1 | HAF5 | 160 | 300 | 12 | alle Seite 2 |
| 6 | HAF6 | HAF1 | 160 | 300 | 13 | alle Seite 1 |
| V1 | HAF1 | HAF1 | 160 | 300 | 13 | 3 x Seite 1 7 x Seite 2 bei 10 Versuchen |

Die Beispiele zeigen, dass mit den gewählten Kombinationen hochfeste Klebverbindungen nach dem Stand der Technik hergestellt werden können. Weiterhin trennten sich alle unterschiedlichen Klebmassenpaarungen auf der erwarteten Seite, während sich beim Vergleichsbeispiel die Seite nicht sicher vorhersagen ließ. Dies zeigt die Vorteile der erfindungsgemäßen Klebebänder auf.

## Patentansprüche

1. Verfahren zum Verkleben und Wiederlösen zweier Substratoberflächen,
wobei für die Verklebung ein hitzeaktiviert verklebbares Flächenelement eingesetzt wird,
das hitzeaktiviert verklebbare Flächenelement zumindest ein elektrisch leitfähiges Flächengebilde sowie zumindest zwei Schichten unterschiedlicher hitzeaktivierbarer Klebemassen umfasst,
wobei sich die erste hitzeaktivierbare Klebmassenschicht im Wesentlichen auf der einen Seite des elektrisch leitfähigen Flächengebildes und die zweite hitzeaktivierbare Klebemasse im Wesentlichen auf der anderen Seite des elektrisch leitfähigen Flächengebildes befindet,
**dadurch gekennzeichnet, dass**
- die Verklebung dadurch bewirkt wird, dass das hitzeaktiviert verklebbare Flächenelement einer Temperatur T₁ ausgesetzt wird, bei der eine gleichzeitige Hitzeaktivierung der beiden hitzeaktivierbaren Klebemassen erfolgt,
- das Wiederlösen dadurch bewirkt wird, das die Verklebungsstelle einer Temperatur T₂ ausgesetzt wird, bei der unter vorgegebenen Bedingungen lediglich eine der hitzeaktivierbaren Schichten des hitzeaktiviert verklebbaren Flächenelementes ihre Klebewirkung im Klebeverbund soweit verliert, das der Klebeverbund getrennt wird.

2. Verfahren nach Anspruch 1, **dadurch gekennzeichnet, dass**
die Temperatur T₁ zur Bewirkung der Verklebung durch induktive Erwärmung des elektrisch leitfähigen Flächengebildes bewirkt wird.

3. Verfahren nach einem der vorangehenden Ansprüche, **dadurch gekennzeichnet, dass**
die Temperatur T₂ zur Bewirkung des Wiederlösens des Klebeverbundes durch induktive Erwärmung des elektrisch leitfähigen Flächengebildes bewirkt wird.

4. Verfahren nach einem der vorangehenden Ansprüche, **dadurch gekennzeichnet, dass** das Wiederlösen des Klebeverbundes bei der Temperatur T₂ durch ein Schmelzen oder durch Zersetzung (Dekomposition) der entsprechenden hitzeaktivierbaren Klebemassenschicht bewirkt wird.

5. Hitzeaktiviert verklebbares Flächenelement, umfassend zumindest ein elektrisch leitfähiges Flächengebilde sowie zumindest zwei Schichten unterschiedlicher hitzeaktivierbarer Klebemassen,
wobei sich die erste hitzeaktivierbare Klebmassenschicht im Wesentlichen auf der einen Seite des elektrisch leitfähigen Flächengebildes und die zweite hitzeaktivierbare Klebemasse im Wesentlichen auf der anderen Seite des elektrisch leitfähigen Flächengebildes befindet,
**dadurch gekennzeichnet, dass** die Aktivierungstemperaturen zur Erzielung der Klebeeigenschaften der hitzeaktivierbaren Klebemassen sich weniger unterscheiden als die Schmelztemperaturen der beiden hitzeaktivierbaren Klebemassen.

6. Hitzeaktiviert verklebbares Flächenelement, umfassend zumindest ein elektrisch leitfähiges Flächengebilde sowie zumindest zwei Schichten unterschiedlicher hitzeaktivierbarer Klebemassen,
wobei sich die erste hitzeaktivierbare Klebmassenschicht im Wesentlichen auf der einen Seite des elektrisch leitfähigen Flächengebildes und die zweite hitzeaktivierbare Klebemasse im Wesentlichen auf der anderen Seite des elektrisch leitfähigen Flächengebildes befindet,
**dadurch gekennzeichnet, dass** die Aktivierungstemperaturen zur Erzielung der Klebeeigenschaften der hitzeaktivierbaren Klebemassen sich weniger unterscheiden als die Zersetzungstemperaturen der beiden hitzeaktivierbaren Klebemassen.

## Claims

1. Method for adhesively bonding and reparting two substrate surfaces,
where a heat-activatedly bondable sheetlike element is used for the bonding,
the heat-activatedly bondable sheetlike element comprises at least one electrically conductive sheetlike structure and also at least two layers of different heat-activatable adhesives,
where the first heat-activatable adhesive layer is located substantially on one side of the electrically conductive sheetlike structure and the second heat-activatable adhesive is located substantially on the other side of the electrically conductive sheetlike structure,
**characterized in that**
- the bonding is brought about by subjecting the heat-activatedly bondable sheetlike element to a temperature T₁ at which there is simultaneous heat activation of the two heat-activatable adhesives,
- the reparting is brought about by subjecting the bond site to a temperature T₂ at which under mandated conditions only one of the heat-activatable layers of the heat-activatedly bondable sheetlike element loses its adhesive effect in the adhesively bonded assembly to an extent such that the adhesively bonded assembly is separated.

2. Method according to Claim 1, **characterized in that** the temperature T₁ for producing the bonding is brought about by inductive heating of the electrically conductive sheetlike structure.

3. Method according to either of the preceding claims, **characterized in that** the temperature T₂ for producing the reparting of the adhesively bonded assembly is brought about by inductive heating of the electrically conductive sheetlike structure.

4. Method according to any of the preceding claims, **characterized in that** the reparting of the adhesively bonded assembly at the temperature T₂ is brought about by melting or by decomposition of the corresponding heat-activatable adhesive layer.

5. Heat-activatedly bondable sheetlike element, comprising at least one electrically conductive sheetlike structure and also at least two layers of different heat-activable adhesives,
where the first heat-activatable adhesive layer is located substantially on one side of the electrically conductive sheetlike structure and the second heat-activatable adhesive is located substantially on the other side of the electrically conductive sheetlike structure,
**characterized in that** the activation temperatures for achieving the adhesive properties of the heat-activatable adhesives differ from one another less than the melting temperatures of the two heat-activatable adhesives.

6. Heat-activatedly bondable sheetlike element, comprising at least one electrically conductive sheetlike structure and also at least two layers of different heat-activable adhesives,
where the first heat-activatable adhesive layer is located substantially on one side of the electrically conductive sheetlike structure and the second heat-activatable adhesive is located substantially on the other side of the electrically conductive sheetlike structure,
**characterized in that** the activation temperatures for achieving the adhesive properties of the heat-activatable adhesives differ from one another less than the decomposition temperatures of the two heat-activatable adhesives.

## Revendications

1. Procédé de collage et de décollage de deux surfaces de substrat, un élément plat collable activé thermiquement étant utilisé pour le collage,
l'élément plat collable activé thermiquement comprenant au moins une structure plate électriquement conductrice et au moins deux couches de différentes masses adhésives activables thermiquement,
la première couche de masse adhésive activable thermiquement se trouvant essentiellement sur un côté de la structure plate électriquement conductrice et la deuxième masse adhésive activable thermiquement se trouvant essentiellement sur l'autre côté de la structure plate électriquement conductrice,
**caractérisé en ce que**
- le collage est réalisé par exposition de l'élément plat collable activé thermiquement à une température T₁ à laquelle une activation thermique simultanée des deux masses adhésives activables thermiquement a lieu,
- le décollage est réalisé par exposition de l'emplacement du collage à une température T₂ à laquelle, dans des conditions prédéfinies, uniquement une des couches activables thermiquement de l'élément plat collable activé thermiquement perd son action adhésive dans le composite adhésif de sorte que le composite adhésif soit séparé.

2. Procédé selon la revendication 1, **caractérisé en ce que** la température T₁ pour la réalisation du collage est atteinte par chauffage inductif de la structure plate électriquement conductrice.

3. Procédé selon l'une quelconque des revendications précédentes, **caractérisé en ce que** la température T₂ pour la réalisation du décollage du composite adhésif est atteinte par chauffage inductif de la structure plate électriquement conductrice.

4. Procédé selon l'une quelconque des revendications précédentes, **caractérisé en ce que** le décollage du composite adhésif à la température T₂ est réalisé par une fusion ou par une dégradation (décomposition) de la couche de masse adhésive activable thermiquement correspondante.

5. Élément de surface collable activé thermiquement, comprenant au moins une structure plate électriquement conductrice, ainsi qu'au moins deux couches de différentes masses adhésives activables thermiquement,
la première couche de masse adhésive activable thermiquement se trouvant essentiellement sur un côté de la structure plate électriquement conductrice et la deuxième masse adhésive activable thermiquement se trouvant essentiellement sur l'autre côté de la structure plate électriquement conductrice,
**caractérisé en ce que** les températures d'activation pour obtenir les propriétés adhésives des masses adhésives activables thermiquement diffèrent moins que les températures de fusion des deux masses adhésives activables thermiquement.

6. Élément de surface collable activé thermiquement, comprenant au moins une structure plate électriquement conductrice, ainsi qu'au moins deux couches de différentes masses adhésives activables thermiquement,
la première couche de masse adhésive activable thermiquement se trouvant essentiellement sur un côté de la structure plate électriquement conductrice et la deuxième masse adhésive activable thermiquement se trouvant essentiellement sur l'autre côté de la structure plate électriquement conductrice,
**caractérisé en ce que** les températures d'activation pour obtenir les propriétés adhésives des masses adhésives activables thermiquement diffèrent moins que les températures de dégradation des deux masses adhésives activables thermiquement.
